# FASCICULE DE BREVET EUROPEEN

(11) **EP 3 060 436 B1**
(45) Date de publication et mention de la délivrance du brevet: **24.10.2018**
(21) Numéro de dépôt: 14789824.1
(22) Date de dépôt: 24.10.2014
(51) Int. Cl.: B60R 21/217, B60R 21/2338

(54) **INTERFACE DE FIXATION POUR ACTIONNEUR PYROTECHNIQUE**
BEFESTIGUNGSSCHNITTSTELLE FÜR EINEN PYROTECHNISCHEN AKTUATOR
ATTACHMENT INTERFACE FOR A PYROTECHNIC ACTUATOR

(30) Priorité: 25.10.2013 FR 1360455
(43) Date de publication de la demande: 31.08.2016
(73) Titulaire: Autoliv Development AB, 447 83 Vårgårda (SE)
(72) Inventeur: WEBER, Marcus, 97531 Untertheres (DE); NEBEL, Raimund, 86836 Obermeitlingen (DE); BIBERGER, Johann, 85283 Wolnzach (DE); HAAS, Martin, 85250 Altomünster (DE); PEIZ, Roland, 86567 Hilgertshausen (DE)
(74) Mandataire: Poindron, Cyrille
(86) Numéro de dépôt international: PCT/EP2014/072887
(87) Numéro de publication internationale: WO 2015/059292

(56) Documents cités:
- EP-A1- 0 744 323
- WO-A1-2012/072234
- WO-A1-2013/017228
- WO-A1-2014/128121
- US-A- 5 378 011
- US-A- 5 791 682
- US-A1- 2013 119 645

## Description

La présente invention concerne de manière générale une interface de fixation pour un actionneur pyrotechnique agencé dans un module de sécurité pour un véhicule automobile, et en particulier un module de sécurité comprenant un coussin de sécurité avec un évent, l'actionneur pyrotechnique étant agencé pour commander l'évent.

Il est connu dans l'art antérieur des dispositifs de commande d'évent, tel que celui décrit dans le document US20100090445, où un actionneur pyrotechnique est agencé pour couper un lien de commande d'un évent d'un coussin de sécurité. En contrepartie, ce système présente notamment l'inconvénient de comporter de nombreuses pièces, avec notamment une lame de coupe, ce qui augmente le coût et la complexité de la solution proposée. De plus, la fixation du lien est compliquée, car il faut faire passer le lien d'abord dans le mécanisme de coupe pour ensuite le fixer autour de l'actionneur pyrotechnique de coupe. Les opérations de montage sont complexes, ce qui engendre des risques de non-conformité.

Dans le cas où le dispositif de coupe est remplacé par un coussin gonflable qui commande le lien, la fixation du coussin gonflable est similaire à celle du lien dans l'exemple ci-dessus, et les mêmes problèmes de complexité de la fixation apparaissent. Le document US20130119645 décrit un module de sécurité selon le préambule de la revendication 1.

Un but de la présente invention est de répondre aux inconvénients du document de l'art antérieur mentionnés ci-dessus et en particulier, tout d'abord, de proposer une interface de fixation pour un coussin gonflable économique et d'un montage aisé.

Pour cela un premier aspect de l'invention concerne un module de sécurité pour véhicule automobile, le module comprenant :
- au moins un coussin gonflable avec une première interface de fixation ;
- au moins un dispositif d'actionnement comprenant :
- un allumeur avec un surmoulage plastique formant une deuxième interface de fixation ;
- un support allumeur avec une troisième interface de fixation agencée pour recevoir et fixer la deuxième interface de fixation ;
caractérisé en ce que ledit au moins un dispositif d'actionnement est agencé pour retenir la première interface de fixation en la prenant en sandwich entre au moins une partie de la deuxième interface de fixation et au moins une partie de la troisième interface de fixation.

La présente mise en oeuvre propose de monter la première interface de fixation (celle du coussin gonflable) directement entre l'allumeur et le support allumeur. La première interface de fixation est donc retenue et fixée par cette prise en sandwich, ce qui permet de localiser la première, la deuxième et la troisième interface de fixation au même endroit et simplifier le reste de la structure, en cumulant les fonctions de fixation sur les même pièces.

Avantageusement, l'allumeur est agencé pour gonfler seul le coussin gonflable. En d'autres termes, il n'y a pas de charge secondaire à l'extérieur de l'allumeur.

Selon un mode de réalisation, l'allumeur est agencé pour pressuriser le coussin gonflable à une pression absolue de 30 bars maximum.

Avantageusement, ledit au moins un dispositif d'actionnement comprend une quatrième interface de fixation en saillie agencée pour recevoir au moins un oeillet formé dans la première interface de fixation. La retenue et la fixation de la première interface de fixation est sécurisée avec cette portion en saillie qui reçoit un oeillet de la première interface de fixation. De plus, la prise en sandwich empêche l'oeillet de sortir de la portion en saillie, fiabilisant ainsi la retenue et la fixation de la première interface. Selon cette mise en oeuvre, la première interface de fixation peut être enfilée sur la quatrième interface de fixation ce qui offre une fonction de pré-positionnement du coussin gonflable sur le dispositif d'actionnement pendant le montage. Ainsi le montage peut être décomposé en une première étape de pré-positionnement du coussin gonflable via sa première interface de fixation, suivie d'une deuxième étape de montage de l'allumeur ou du dispositif d'actionnement sur le module par exemple.

Avantageusement, l'oeillet est agencé pour être monté serré sur la quatrième interface de fixation. Selon cette mise en oeuvre, le pré-positionnement est plus robuste.

Avantageusement, la troisième interface de fixation comprend un orifice de fixation, la première interface de fixation comprend au moins une languette du coussin gonflable sur laquelle est agencé ledit au moins un oeillet, et ladite au moins une languette est insérée dans l'orifice de fixation du support allumeur. Le passage de la languette dans l'orifice de fixation de la troisième interface de fixation (qui va donc recevoir la deuxième interface de fixation de l'allumeur) sécurise encore la fixation du coussin gonflable.

Avantageusement, l'allumeur présente une direction axiale, la quatrième interface de fixation est formée par deux index agencés de manière dissymétrique par rapport à la direction axiale de l'allumeur, pour offrir un détrompage angulaire entre l'allumeur et le support allumeur, et la première interface de fixation comprend deux oeillets, chacun agencé pour être monté serré sur un des deux index. La direction axiale peut être définie par exemple par un axe de symétrie d'un étui de l'allumeur, ou par une direction de broches de connexion de l'allumeur. La quatrième interface de fixation est avantageusement utilisée pour offrir un détrompage angulaire entre l'allumeur et le support allumeur, ce qui réduit les risques de montage non conforme.

Avantageusement, les index sont agencés sur le support allumeur, et l'allumeur comprend des évidements agencés pour recevoir les index. Cela réduit les risques d'échappement du coussin gonflable lors de son déploiement puisque les degrés de libertés des languettes sont ainsi limités, et assure un détrompage du coussin gonflable par rapport au support allumeur.

Avantageusement, le module de sécurité comprend :
- un coussin de sécurité avec un évent,
- un lien reliant le coussin gonflable et l'évent.

Avantageusement, le lien relié au coussin gonflable maintient l'évent fermé, le lien est agencé pour se détacher du coussin gonflable lorsque ce dernier est gonflé, et l'allumeur, lorsqu'il est mis à feu, est agencé pour gonfler le coussin gonflable.

Avantageusement, le lien est relié au coussin gonflable par une couture fusible, agencée pour se rompre lors d'un gonflage du coussin gonflable provoqué par une mise à feu de l'allumeur.

Avantageusement, l'allumeur est en communication directe avec le coussin gonflable. Autrement dit, l'allumeur traverse le support allumeur pour délivrer les gaz de gonflage directement dans le coussin gonflable.

Avantageusement, la deuxième interface de fixation comprend des moyens de clipsage sur le support allumeur.

Avantageusement, les moyens de clipsage comprennent au moins une portion déformable agencée se déformer élastiquement lors du montage de l'allumeur sur le support allumeur, et pour prendre par retour élastique une position de blocage contre le support allumeur lorsque l'allumeur est en position montée, pour empêcher tout retrait de l'allumeur.

Avantageusement, l'allumeur comprend des broches de connexion allongées, et le surmoulage plastique forme, au niveau des broches de connexion, une empreinte de connexion agencée pour recevoir et retenir un connecteur. Avantageusement, le connecteur est un connecteur mâle.

Avantageusement, l'allumeur comprend :
- au moins une matière pyrotechnique agencée pour être mise à feu par un élément chauffant,
- un étui refermant ladite au moins une matière pyrotechnique, et agencé dans un puits du surmoulage plastique,
- des broches de connexion allongées,
et le puits présente une direction axiale sensiblement parallèle aux broches de connexion.

Avantageusement, l'étui comprend une paroi latérale et un fond avec une épaisseur supérieure à celle de la paroi latérale. Les risques de rupture et/ou de détachement de pétales de l'étui, lors du fonctionnement de l'allumeur provoquant une ouverture sous pression brutale de l'étui, sont réduits avec cette mise en oeuvre. Cela permet en outre de limiter l'amplitude angulaire d'ouverture des pétales et le gonflement de l'étui et donc de réduire les sollicitations du surmoulage plastique lors de la mise à feu de l'allumeur.

Avantageusement, l'étui présente un fond comportant des lignes de faiblesse agencées pour provoquer un pétalage du fond lors du fonctionnement de l'allumeur, et le nombre de pétales est inférieur à huit. Cette mise en oeuvre améliore la résistance à la rupture des pétales lors du fonctionnement.

Avantageusement, le puits est d'une profondeur supérieure ou égale à la moitié du diamètre de l'étui. Cela évitera tout dépassement des pétales du puits de surmoulage et ainsi toute agression d'un élément extérieur à l'allumeur pyrotechnique tel qu'un tissu d'airbag.

Avantageusement, ladite au moins une portion déformable présente une face de blocage sur le support, et le puits présente une extrémité de sortie des gaz de l'allumeur agencée à une distance de ladite face de blocage supérieure ou égale à 15 millimètres. Cette mise en oeuvre permet de limiter les fuites par la fixation de l'allumeur sur le support.

Avantageusement, le puits présente une profondeur comprise entre 5 et 10 millimètres, bornes incluses.

Avantageusement, le puits présente un diamètre supérieur de deux à trois millimètres à celui de l'étui. Le déploiement des pétales est optimal avec cette mise en oeuvre : les pétales ne prennent pas appui sur le puits lors de leur ouverture et ne risquent donc pas de l'endommager. Cela permet en outre de réaliser un outil de moulage de réalisation du surmoulage plastique suffisamment massif de manière à éviter toute érosion lors de l'injection et donc éviter toute usure prématurée du moule. Enfin, cela permet de maintenir correctement l'allumeur pendant l'opération de surmoulage et ainsi des pièces de dimensions constantes.

Avantageusement, l'allumeur comprend une traversée de verre sur laquelle l'étui est fixé par une soudure, et ladite au moins une portion déformable est agencée sur le surmoulage plastique en regard d'une zone de l'étui entre la soudure et le fond de l'étui. Lors du fonctionnement de l'allumeur, l'étui va avoir tendance à gonfler au dessus de la soudure avec la traversée de verre. La déformation maximale et donc la sollicitation maximale du surmoulage se trouvera au niveau de la zone de contact entre l'étui et le surmoulage, entre la soudure et le fond de l'étui. Selon cette mise en oeuvre, en regard de cette zone, la ou les portion(s) déformable(s) fait (font) aussi office de nervures de renfort.

Avantageusement, la soudure est agencée pour être en regard du support lorsque l'allumeur est en position insérée. Le support participe à la résistance de la soudure en lui fournissant une reprise d'effort.

Avantageusement, le surmoulage plastique est réalisé en polyamide 6.6, avec 30% en masse de fibres de verre.

Avantageusement, selon un mode de réalisation,
- le support allumeur comprend une ouverture de contrôle
- la portion déformable comprend une portion mâle dont une première partie est en regard de l'ouverture de contrôle lorsque la portion déformable est passée en position de blocage. Cette mise en oeuvre permet d'effectuer un contrôle de la présence de la portion déformable après montage.

Avantageusement, la portion mâle comprend une deuxième partie, de surface supérieure à la première partie, qui est en regard avec l'ouverture de contrôle lorsque l'allumeur est en position insérée avec la portion déformable restée déformée. Cette mise en oeuvre permet de vérifier que la portion déformable est bien en position de blocage, après insertion.

Avantageusement, le module comprend un boîtier, et le support allumeur est une partie du boîtier. La structure générale du module est simplifiée.

Selon un mode de réalisation, le coussin de sécurité est agencé pour effectuer une retenue d'un occupant du véhicule pendant une collision, et le coussin gonflable est agencé pour effectuer une commande d'un mécanisme du module de sécurité.

Un deuxième aspect de l'invention est un véhicule automobile comprenant au moins un module de sécurité selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un module de sécurité selon la présente invention, dans une première configuration de déploiement ;
- la figure 2 représente le module de sécurité de la figure 1, dans une deuxième configuration de déploiement ;
- la figure 3 représente une vue éclatée d'un dispositif d'actionnement pyrotechnique et d'un coussin gonflable du module de sécurité de la figure 1 ;
- les figures 4, 5 et 6 représentent chacune une étape de montage du dispositif d'actionnement pyrotechnique et du coussin gonflable de la figure 3;
- la figure 7 représente un détail du support allumeur et de l'allumeur inséré dans le support allumeur, selon trois cas de figure de montage ;
- la figure 8 représente une vue en coupe de l'allumeur.

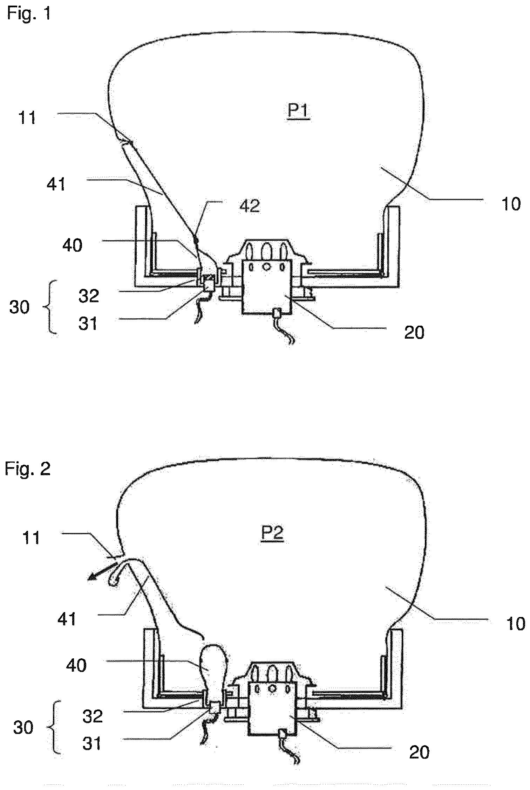

La figure 1 représente un module de sécurité pour véhicule automobile, comprenant un coussin de sécurité 10, un générateur de gaz 20 agencé pour gonfler le coussin de sécurité 10, un dispositif d'actionnement pyrotechnique 30 (comprenant un allumeur 31 et un support allumeur 32), et un coussin gonflable 40 relié à un évent 11 du coussin de sécurité 10 par un lien 41.

Tel que représenté, le coussin de sécurité 10 est déployé, sous l'action de gaz de gonflage générés par le générateur de gaz 20. Il règne dans le coussin de sécurité 10 une pression P1, calculée par exemple pour retenir et amortir un occupant lors d'une collision du véhicule automobile avec un obstacle. Dans certaines conditions de collision ou pendant un certain laps de temps pendant retenue de l'occupant, la pression doit être maintenue dans le coussin de sécurité 10 et l'évent 11 doit rester fermé. A cet effet, le lien 41 le maintien fermé et il est maintenu tendu par le coussin gonflable 40.

La figure 2 représente le module de sécurité de la figure 1, avec l'évent 11 ouvert. En effet, sous certaines conditions de collision, si l'occupant est détecté en dehors de sa position normale, ou en fin de retenue de l'occupant, il peut être intéressant de faire baisser la pression dans le coussin de sécurité 10. C'est alors que le dispositif d'actionnement 30 est activé pour gonfler le coussin gonflable 40 afin de libérer le lien 41 qui n'est plus tendu et laisse l'évent 11 s'ouvrir, pour obtenir une pression P2 inférieure à P1.

L'allumeur 31 du dispositif d'actionnement 30 a gonflé le coussin gonflable 40 et une couture fusible (visible sur la figure 1) s'est rompue, libérant ainsi le lien 41.

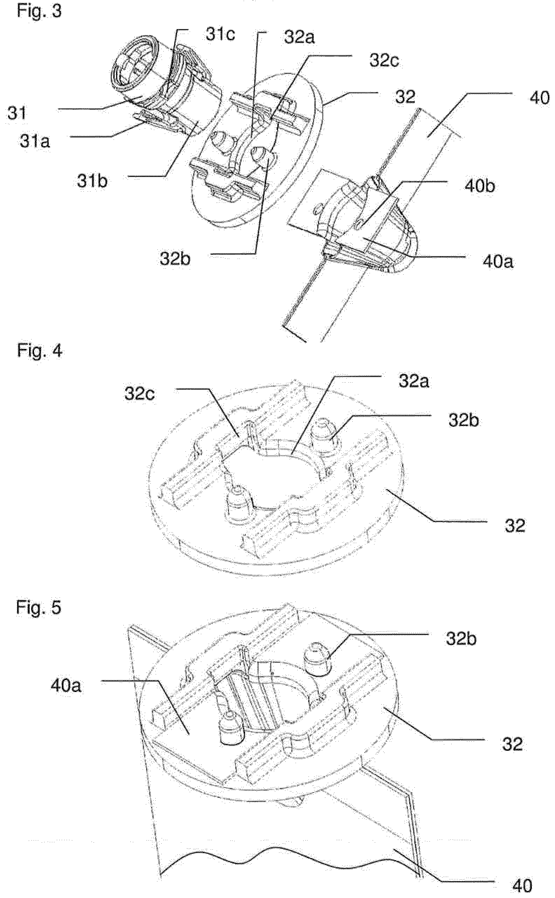

La figure 3 représente une vue éclatée du support allumeur 32, du coussin gonflable 40 et de l'allumeur 31. Le coussin gonflable 40 comprend deux languettes 40a chacune portant un oeillet 40b, l'ensemble formant une première interface de fixation.

L'allumeur 31 comprend un cylindre 31b et deux pattes 31a. Les pattes 31a sont des portions déformables du surmoulage plastique formant le corps de l'allumeur 31. Le cylindre 31b et les pattes 31a forment une deuxième interface de fixation.

Le support allumeur 32 comprend un orifice de fixation 32a et deux fentes 32c qui forment une troisième interface de fixation, agencée pour recevoir et fixer la deuxième interface de fixation de l'allumeur 31 (le cylindre 31b s'engage dans l'orifice de fixation 32a, et les pattes 31a se déforment élastiquement lors de l'insertion dans les fentes 32c, pour aller dans une position de blocage contre le support allumeur 32, une fois l'allumeur 31 complètement inséré dans le support allumeur 32). Les pattes 31a vont se mettre en position de blocage par retour élastique, au niveau d'un épaulement (non visible) dans chaque fente 32c

Avantageusement, l'allumeur 31 comprend des broches de connexion, et ces dernières sont perpendiculaires aux épaulements, pour que les efforts provoqués par la mise en place et/ou le retrait d'un connecteur soient exercés dans une direction axiale des pattes 31a.

Le support allumeur 32 comprend également deux index 32b formant une quatrième interface de fixation agencée pour recevoir les oeillets 40b de la première interface de fixation. En effet, préalablement à l'insertion de l'allumeur 31, les languettes 40a sont insérées dans l'orifice de fixation 32a, et les oeillets 40b enfilés en force sur les index 32b. Ainsi, le coussin gonflable 40 est pré-positionné sur le support allumeur 32, et l'insertion de l'allumeur 31 prend la première interface du coussin gonflable 40 en sandwich entre une partie de la deuxième interface de fixation (le cylindre 31b) et la troisième interface de fixation (l'orifice de fixation 32a).

La figure 4 représente le support allumeur 32, avant toute opération de montage. On voit en détail le support allumeur 32 qui comprend l'orifice de fixation 32a et les deux fentes 32c qui forment la troisième interface de fixation, ainsi que deux index 32b qui forment la quatrième interface de fixation.

On peut noter également la présence d'un chanfrein sur l'arête de l'orifice de fixation 32a, amené à être en contact avec la deuxième interface de fixation de l'allumeur, qui peut également être chanfreinée dans cette zone, pour améliorer le positionnement relatif des deux composants, et également augmenter l'étanchéité lors du fonctionnement.

La figure 5 représente le support allumeur 32, avec le coussin gonflable 40 pré-positionné dessus. A cet effet, les oeillets 40b ont été installés sur les index 32b, avec les languettes 40a passées à l'intérieur de l'orifice de fixation 32a.

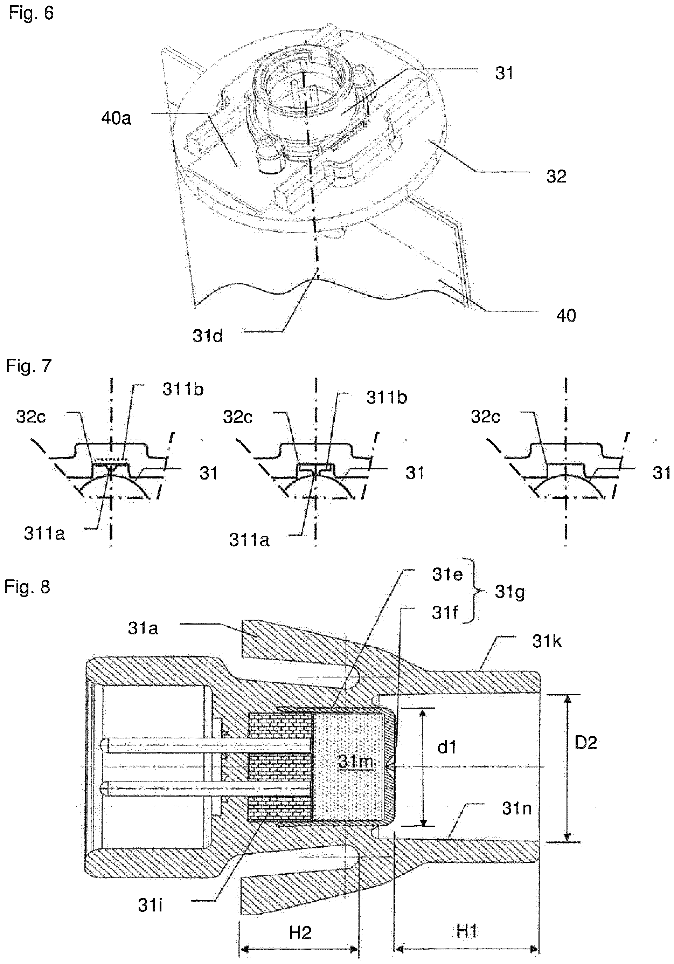

La figure 6 représente la dernière étape d'assemblage avec l'allumeur 31 inséré dans le support allumeur 32. Une fois l'allumeur 31 complétement inséré dans le support 32, les pattes 31a, par retour élastique, se sont mise en position de blocage derrière un épaulement non visible des fentes 32c, ce qui rend tout retrait de l'allumeur 31 impossible.

On remarque également que deux évidements 31c (visibles sur la figure 3) de l'allumeur 31 s'engagent avec les index 32b pour garantir la bonne orientation angulaire de l'allumeur 31 par rapport au support allumeur 32, selon un axe 31d de l'allumeur 31. Le détrompage angulaire est obtenu en agençant les index 32b de manière non symétrique par rapport à l'axe 31d.

La figure 7 représente un détail de la vue de dessus de l'allumeur 31 inséré dans le support allumeur 32, au niveau d'une fente 32c et de la patte 31a correspondante, pour illustrer trois scénarios de montage.

La figure de gauche représente un montage correct. La patte 31a, présentant une section en "Té" s'est correctement mise en position de blocage après insertion de l'allumeur 31. On ne voit qu'une première partie 311a inférieure du Té, au travers de la fente 32c. Une deuxième partie 311b, de surface supérieure à la première partie 311a est derrière le support allumeur 32, représentée en pointillés. On peut donc insérer dans la fente 32c (qui fait alors office d'ouverture de contrôle) une fourchette de contrôle comprenant un dégagement central, pour vérifier que la patte 31a est bien en position de blocage.

La figure du milieu illustre un scénario de montage où la patte 31a ne s'est pas mise correctement en position de blocage, ce qui signifie qu'un retrait de l'allumeur 31 est possible. On voit le reste de la patte 31a en Té : la deuxième partie 311b, de surface supérieure à la première partie 311a, et il serait impossible d'insérer la fourchette de contrôle, car elle buterait sur la deuxième partie 311b de la patte 31a en Té. Ce type de défaut est ainsi détectable.

La figure de droite représente un scénario de montage avec la patte 31a absente, en raison d'une rupture par exemple. Toute la fente 32c est libre, et la fourchette de contrôle passerait complétement, sans même avoir la partie évidée centrale entrer en butée avec la première partie 311a de la patte 31a, ce qui rend également ce défaut détectable.

La figure 8 représente une vue en coupe de l'allumeur 31. Ce dernier comporte un surmoulage plastique qui entoure un étui 31g soudé sur une traversée de verre 31i et refermant une matière pyrotechnique 31m. Un puits 31n ménagé dans le surmoulage plastique permet à l'étui 31g de s'ouvrir pour laisser passer des gaz et/ou particules chaudes créées lors du fonctionnement de l'allumeur.

Le fonctionnement de l'allumeur est initié par l'allumage de la matière pyrotechnique 31m. Plusieurs techniques peuvent être utilisées, comme par exemple ici, le passage d'un courant électrique dans un élément résistif qui va donc chauffer et provoquer l'allumage de la matière pyrotechnique 31m. La pression dans l'étui 31g va rapidement augmenter et forcer l'étui 31g à se rompre.

L'étui 31g présente une paroi 31e cylindrique et un fond 31f. Afin de faciliter l'ouverture de l'étui 31g, le fond 31f est pétalé, de préférence en huit secteurs ou pétales afin de limiter les risques de rupture et/ou détachement de pétales lors du fonctionnement de l'allumeur.

De plus, l'épaisseur du fond 31f est supérieure à celle de la paroi 31e, ce qui réduit encore le risque de rupture de pétales ainsi que l'amplitude angulaire d'ouverture des pétales.

Le puits 31n présente une profondeur H1 supérieure ou égale à la moitié du diamètre d1 de l'étui. En conséquence, les pétales, une fois ouverts, ne dépassent pas du puits et ne peuvent donc pas agresser un élément extérieur à l'allumeur tel qu'un tissu d'airbag qui pourrait se trouver à proximité. Cela permet en outre de mieux guider les gaz et/ou particules générés lors de la mise à feu de l'allumeur pour qu'ils soient dirigés directement vers un coussin gonflable par exemple. De plus, le puits 31n présente un diamètre D2 supérieur au diamètre d1, si bien que les pétales peuvent s'ouvrir sans être limités ni buter sur le puits 31n. Idéalement, le diamètre D2 est supérieur au diamètre d1 de 1,5 à 3 millimètres. Les risques de rupture du puits sont ainsi réduits.

Il est à noter que les pattes 31a et les fentes 32c peuvent ne pas être agencés de manière symétrique selon l'axe de l'allumeur, mais au contraire, peuvent être agencés de manière dissymétrique, pour offrir un détrompage angulaire et orienter correctement les broches de l'allumeur par rapport au support et au reste du module de sécurité. Enfin, les pattes 31a présentent une longueur libre H2 comprise entre 5 et 10 millimètres, pour offrir une bonne souplesse. Idéalement, la longueur libre H2 est comprise entre 7 et 9 millimètres, pour présenter un bon retour élastique et au final une bonne facilité de clipsage.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Module de sécurité pour véhicule automobile, le module comprenant :
- au moins un coussin gonflable (40) avec une première interface de fixation (40a, 40b) ;
- au moins un dispositif d'actionnement comprenant :
- un allumeur (31) avec un surmoulage plastique formant une deuxième interface de fixation (31a, 31b) ;
- un support allumeur (32) avec une troisième interface de fixation (32a, 32c) agencée pour recevoir et fixer la deuxième interface de fixation ;
**caractérisé en ce que** ledit au moins un dispositif d'actionnement est agencé pour retenir la première interface de fixation en la prenant en sandwich entre au moins une partie de la deuxième interface de fixation et au moins une partie de la troisième interface de fixation.

2. Module de sécurité selon la revendication précédente, dans lequel ledit au moins un dispositif d'actionnement comprend une quatrième interface de fixation en saillie agencée pour recevoir au moins un oeillet (40b) formé dans la première interface de fixation.

3. Module de sécurité selon la revendication précédente, dans lequel l'oeillet (40b) est agencé pour être monté serré sur la quatrième interface de fixation.

4. Module de sécurité selon l'une des revendications 2 ou 3, dans lequel la troisième interface de fixation comprend un orifice de fixation, dans lequel la première interface de fixation comprend au moins une languette (40a) du coussin gonflable (40) sur laquelle est agencé ledit au moins un oeillet (40b), et dans lequel ladite au moins une languette (40a) est insérée dans l'orifice de fixation du support allumeur (32).

5. Module de sécurité selon l'une des revendications 2 à 4, dans lequel l'allumeur (31) présente une direction axiale, dans lequel la quatrième interface de fixation est formée par deux index (32b) agencés de manière dissymétrique par rapport à la direction axiale de l'allumeur (31), pour offrir un détrompage angulaire entre l'allumeur (31) et le support allumeur (32), et dans lequel la première interface de fixation comprend deux oeillets (40b), chacun agencé pour être monté serré sur un des deux index (32b).

6. Module de sécurité selon l'une des revendications précédentes, comprenant :
- un coussin de sécurité (10) avec un évent (11),
- un lien (41) reliant le coussin gonflable (40) et l'évent (11).

7. Module de sécurité selon la revendication précédente, dans lequel le lien (41) relié au coussin gonflable (40) maintient l'évent (11) fermé, dans lequel le lien (41) est agencé pour se détacher du coussin gonflable (40) lorsque ce dernier est gonflé, et dans lequel l'allumeur (31), lorsqu'il est mis à feu, est agencé pour gonfler le coussin gonflable (40).

8. Module de sécurité selon la revendication précédente, dans lequel le lien (41) est relié au coussin gonflable (40) par une couture fusible (42).

9. Module de sécurité selon l'une des revendications précédentes, dans lequel l'allumeur (31) est en communication directe avec le coussin gonflable (40).

10. Module de sécurité selon l'une des revendications précédentes, dans lequel la deuxième interface de fixation comprend des moyens de clipsage sur le support allumeur (32).

11. Module de sécurité selon la revendication précédente, dans lequel les moyens de clipsage comprennent au moins une portion déformable agencée se déformer élastiquement lors du montage de l'allumeur (31) sur le support allumeur (32), et pour prendre par retour élastique une position de blocage contre le support allumeur (32) lorsque l'allumeur (31) est en position montée, pour empêcher tout retrait de l'allumeur (31).

12. Module de sécurité selon la revendication précédente, dans lequel :
- le support allumeur (32) comprend une ouverture de contrôle
- la portion déformable comprend une portion mâle dont une première partie (311a) est en regard de l'ouverture de contrôle lorsque la portion déformable est passée en position de blocage.

13. Module de sécurité selon la revendication précédente, dans lequel la portion mâle comprend une deuxième partie (311b), de surface supérieure à la première partie (311a), qui est en regard avec l'ouverture de contrôle lorsque l'allumeur (31) est en position insérée avec la portion déformable restée déformée.

14. Module de sécurité selon l'une des revendications précédentes, comprenant un boîtier, et dans lequel le support allumeur est une partie du boîtier.

15. Véhicule automobile comprenant au moins un module de sécurité selon l'une des revendications précédentes.

## Patentansprüche

1. Sicherheitsmodul für Kraftfahrzeuge, wobei das Modul Folgendes umfasst:
- mindestens einen Airbag (40) mit einer ersten Befestigungsschnittstelle (40a, 40b);
- mindestens eine Betätigungsvorrichtung, die Folgendes umfasst:
- einen Zünder (31) mit einer Kunststoffumspritzung, die eine zweite Befestigungsschnittstelle (31a, 31b) bildet;
- einen Zünderträger (32) mit einer dritten Befestigungsschnittstelle (32a, 32c), die so angeordnet ist, dass sie die zweite Befestigungsschnittstelle aufnimmt und fixiert;
**dadurch gekennzeichnet, dass** die mindestens eine Betätigungsvorrichtung so angeordnet ist, dass sie die erste Befestigungsschnittstelle festhält, indem sie sie eingeschoben zwischen mindestens einem Teil der zweiten Befestigungsschnittstelle und mindestens einem Teil der dritten Befestigungsschnittstelle hält.

2. Sicherheitsmodul nach dem vorhergehenden Anspruch, wobei die mindestens eine Betätigungsvorrichtung eine vierte vorragende Befestigungsschnittstelle umfasst, die so angeordnet ist, dass sie mindestens eine Öse (40b) aufnimmt, die in der ersten Befestigungsschnittstelle ausgebildet ist.

3. Sicherheitsmodul nach dem vorhergehenden Anspruch, wobei die Öse (40b) so angeordnet ist, dass sie fest an der vierten Befestigungsschnittstelle montiert wird.

4. Sicherheitsmodul nach Anspruch 2 oder 3, wobei die dritte Befestigungsschnittstelle eine Befestigungsöffnung umfasst, wobei die erste Befestigungsschnittstelle mindestens eine Lasche (40a) des Airbags (40) umfasst, an der die mindestens eine Öse (40b) angeordnet ist, und wobei die mindestens eine Lasche (40a) in die Befestigungsöffnung des Zünderträgers (32) eingeführt ist.

5. Sicherheitsmodul nach einem der Ansprüche 2 bis 4, wobei der Zünder (31) eine axiale Richtung aufweist, wobei die vierte Befestigungsschnittstelle aus zwei Anzeigern (32b) gebildet ist, die bezogen auf die axiale Richtung des Zünders (31) asymmetrisch angeordnet sind, damit zwischen dem Zünder (31) und dem Zünderträger (32) für eine Winkeleindeutigkeit gesorgt ist, und wobei die erste Befestigungsschnittstelle zwei Ösen (40b) umfasst, die jeweils so angeordnet sind, dass sie fest an einem der beiden Anzeiger (32b) montiert werden.

6. Sicherheitsmodul nach einem der vorhergehenden Ansprüche, umfassend:
- einen Airbag (10) mit einer Ausströmöffnung (11),
- ein Verbindungsglied (41), das den Airbag (40) und die Ausströmöffnung (11) verbindet.

7. Sicherheitsmodul nach dem vorhergehenden Anspruch, wobei das Verbindungsglied (41), das mit dem Airbag (40) verbunden ist, die Ausströmöffnung (11) geschlossen hält, wobei das Verbindungsglied (41) so angeordnet ist, dass es sich von dem Airbag (40) löst, wenn er gefüllt wird, und wobei der Zünder (31), wenn er gezündet wird, so angeordnet ist, dass er den Airbag (40) füllt.

8. Sicherheitsmodul nach dem vorhergehenden Anspruch, wobei das Verbindungsglied (41) über eine Sollreißnaht (42) mit dem Airbag (40) verbunden ist.

9. Sicherheitsmodul nach einem der vorhergehenden Ansprüche, wobei der Zünder (31) in direkter Verbindung zu dem Airbag (40) steht.

10. Sicherheitsmodul nach einem der vorhergehenden Ansprüche, wobei die zweite Befestigungsschnittstelle Mittel zum Schnappbefestigen am Zünderträger (32) umfasst.

11. Sicherheitsmodul nach dem vorhergehenden Anspruch, wobei die Schnappbefestigungsmittel mindestens einen verformbaren Abschnitt umfassen, der so angeordnet ist, dass er sich bei der Anbringung des Zünders (31) am Zünderträger (32) elastisch verformt und durch elastische Rückfederung eine Feststellposition an dem Zünderträger (32) einnimmt, wenn sich der Zünder (31) in der eingebauten Position befindet, damit ein Herausziehen des Zünders (31) verhindert wird.

12. Sicherheitsmodul nach dem vorhergehenden Anspruch, wobei:
- der Zünderträger (32) eine Überprüfungsöffnung umfasst,
- der verformbare Abschnitt einen Steckabschnitt umfasst, dessen erster Teil (311a) der Überprüfungsöffnung gegenüberliegt, wenn der verformbare Abschnitt die Feststellposition eingenommen hat.

13. Sicherheitsmodul nach dem vorhergehenden Anspruch, wobei der Steckabschnitt einen zweiten Teil (311b) mit einer größeren Fläche als der erste Teil (311a) umfasst, der der Überprüfungsöffnung gegenüberliegt, wenn sich der Zünder (31) in der eingeführten Position befindet, wobei der verformbare Abschnitt verformt bleibt.

14. Sicherheitsmodul nach einem der vorhergehenden Ansprüche, das ein Gehäuse umfasst, und wobei der Zünderträger ein Teil des Gehäuses ist.

15. Kraftfahrzeug, das mindestens ein Sicherheitsmodul nach einem der vorhergehenden Ansprüche umfasst.

## Claims

1. Security module for an automobile vehicle, which module comprises:
- at least one inflatable airbag (40) with a first attachment interface (40a, 40b);
- at least one actuator comprising:
- an igniter (31) with a plastic overmoulding forming a second attachment interface (31a, 31b);
- an igniter support (32) with a third attachment interface (32a, 32c), arranged to receive and fix the second attachment interface;
**characterized by** that said at least one actuator is designed to retain the first attachment interface by sandwiching it between at least one part of the second attachment interface and at least one part of the third attachment interface.

2. Security module according to the previous claim, in which said at least one actuator comprises a fourth, projecting attachment interface designed to receive at least one eyelet (40b) formed in the first attachment interface.

3. Security module according to the previous claim, in which the eyelet (40b) is designed to be mounted tightly on the fourth attachment interface.

4. Security module according to one of Claims 2 or 3, in which the third attachment interface comprises an attachment orifice, in which the first attachment interface comprises at least one strip (40a) of the airbag (40) on which strip said at least one eyelet (40b) is arranged, and in which said at least one strip (40a) is inserted into the attachment orifice of the igniter support (32).

5. Security module according to one of Claims 2 to 4, in which the igniter (31) has an axial direction in which the fourth attachment interface is formed by two indicators (32b) arranged dissymmetrically relative to the axial direction of the igniter (31) in order to offer an angular keyway between the igniter (31) and the igniter support (32), and in which the first attachment interface comprises two eyelets (40b), each of which is designed to be mounted tightly on one of the two indicators (32b).

6. Security module according to one of the previous claims, comprising:
- a security bag (10) with a vent hole (11),
- a link (41) connecting the air bag (40) and the vent hole (11).

7. Security module according to the previous claim, in which the link (41) connected to the air bag (40) keeps the vent hole (11) closed, in which the link (41) is designed to detach from the air bag (40) when the latter is inflated, and in which the igniter (31), when it is ignited, is designed to inflate the air bag (40).

8. Security module according to the previous claim, in which the link (41) is connected to the air bag (40) by a meltible seam.

9. Security module according to one of the previous claims, in which the igniter (31) directly communicates with the air bag (40).

10. Security module according to one of the previous claims, in which the second attachment interface comprises clip attachment means on the igniter support (32).

11. Security module according to the previous claim, in which the clip attachment means comprises at least one deformable part designed to deform elastically during the mounting of the igniter (31) on the igniter support (32), and to take a blocking position against the igniter support (32) by elastic return when the igniter (31) is in a mounted position in order to prevent any retraction of the igniter (31).

12. Security module according to the previous claim, in which:
- the igniter support (32) comprises an inspection opening,
- the deformable part comprises a male part of which a first part (311a) faces the inspection opening when the deformable part has switched into the blocking position.

13. Security module according to the previous claim, in which the male part comprises a second part (311b) with a surface greater than the first part (311a), which faces the inspection opening when the igniter (31) is in the inserted position with the deformable part remaining deformed.

14. Security module according to one of the previous claims, comprising a casing, and in which the igniter support is a part of the casing.

15. An automobile vehicle comprising at least one security module according to one of the previous claims.
